# EUROPÄISCHE PATENTSCHRIFT

(11) **EP 3 533 523 B1**
(45) Veröffentlichungstag und Bekanntmachung des Hinweises auf die Patenterteilung: **01.12.2021**
(21) Anmeldenummer: 19401011.2
(22) Anmeldetag: 27.02.2019
(51) Int. Cl.: B05B 12/06, A01M 7/00, B05B 1/08, B05B 1/16

(54) **DÜSENANORDNUNG FÜR EINE FELDSPRITZE**
NOZZLE ASSEMBLY FOR A FIELD SPRAYER
DISPOSITIF DE BUSE POUR PULVÉRISATEUR AGRICOLE

(30) Priorität: 01.03.2018 DE 102018104689
(43) Veröffentlichungstag der Anmeldung: 04.09.2019
(73) Patentinhaber: Amazonen-Werke H. Dreyer SE & Co. KG, 49205 Hasbergen (DE)
(72) Erfinder: Rahe, Florian, 49504 Lotte (DE)

(56) Entgegenhaltungen:
- EP-A2- 0 357 154
- WO-A1-2013/030071
- WO-A1-2013/093495
- DE-A1- 4 101 768
- US-A- 5 775 597

## Beschreibung

Die Erfindung betrifft eine Feldspritze gemäß dem Oberbegriff des Anspruchs 1.

Feldspritzen umfassen bekanntermaßen quer zur Fahrtrichtung ausklappbare Verteilergestänge mit einer Vielzahl von Spritzdüsen zum Ausbringen eines Spritzmittels auf landwirtschaftlichen Anbauflächen. Die Spritzdüsen sind Bestandteile von am Verteilergestänge in geeigneten Abständen zueinander angeordneten Düsenanordnungen mit zentral schaltbaren Ventilen, die zunehmend nach dem bekannten Prinzip der Pulsweitenmodulation zur Einstellung der Durchflussrate arbeiten.

Die einzelnen Düsenanordnungen weisen in der Regel mehrere Spritzdüsen auf, die dem Ventil wahlweise zugeschaltet werden können. Es ist dann ferner üblich, vor jeder Spritzdüse einen Spritzmittelfilter anzuordnen, der im Spritzmittel vorhandene Festkörper, wie beispielsweise Verunreinigungen und/oder unvollständig gelöstes Material, zurückhalten soll.

Es hat sich insbesondere bei höheren Modulationsfrequenzen von etwa 20-30 Hz und/oder bei häufigem und/oder kurzzeitigem Zuschalten/Wegschalten einzelner Düsen als nachteilig herausgestellt, dass sich am Spritzmittelfilter, beispielsweise am Übergang zwischen einem vorgeschalteten Spritzmittelkanal und der Kavität zur Aufnahme des Spritzmittelfilters, Luftblasen ausbilden können. Diese wirken als kompressibles Puffervolumen und verhindern oftmals einen ausreichend schnellen Druckanstieg an der Spritzdüse, so dass diese nicht den gewünschten Spritzkegel ausstößt. Statt in Form harter gepulster Spritzstrahlen fließt das Spritzmittel dann mit vergleichsweise geringer Geschwindigkeit und näherungsweise kontinuierlich aus der Spritzdüse.

Diese Problematik wird noch dadurch verstärkt, dass die Spritzmittelfilter bei bestimmten Spritzmitteln und/oder bei sehr guter Wasserqualität nicht benötigt werden und dann der Einfachheit halber oder aus Kostengründen auch weggelassen werden. Die unbestückte Kavität bietet dann zusätzlich Gelegenheit zur Ausbildung störender Luftblasen.

Auch können die Spritzmittelfilter bei sehr schlechter Wasserqualität im Arbeitsbetrieb so schnell verstopfen, dass sie lieber weggelassen werden und in Kauf genommen wird, dass sich Verunreinigungen dann im Bereich der Spritzdüse sammeln und dort zu gegebener Zeit entfernt werden müssen. Auch dann droht verstärkt Blasenbildung.

Aufgrund der Ausrichtung der Spritzdüsen zur Anbaufläche hin, ist eine Entlüftung des nach oben führenden Anschlussbereichs mit der Kavität des Spritzmittelfilters zudem schwierig.

Ferner sind aus der WO 2013/093495 A1 Feldspritzen bekannt, die ein Verteilergestänge mit mehreren daran angeordneten Düsenanordnungen aufweisen. Das in einem Vorratsbehälter vorgehaltene Spritzmittel kann dabei über ein Magnetventil an die mehreren Düsenanordnungen freigegeben werden. Nachteilig hierbei ist das entlang der Düsenanordnungen jeweils nur eine übereinstimmende Menge an Spritzmittel aus den Spritzdüsen ausbringbar sind und somit auf, insbesondere punktuell, unterschiedliche Bedingungen auf der Anbaufläche nicht eingegangen werden kann.

Es besteht daher zunehmend Bedarf zur Abmilderung oder Beseitigung der oben genannten Problematik an Düsenanordnungen für Feldspritzen.

Die gestellte Aufgabe wird mit einer Feldspritze nach Anspruch 1 gelöst. Demnach umfasst die Düsenanordnung einen Düsenstock mit einem Ventil zur pulsweitenmodulierten Freigabe eines Spritzmittels und mit wenigstens einem ausgangsseitigen Anschluss für eine Spritzdüse, wobei das Ventil mit dem Ausgang des Anschlusses durch einen Spritzmittelkanal verbunden ist. Erfindungsgemäß beträgt der Leitungsquerschnitt des Spritzmittelkanals im Mittel 5 ― 50 mm², insbesondere 10 ― 30 mm².

Dadurch kann der Entstehung von Luftblasen zwischen dem Ventil und dem Ausgang des Anschlusses entgegengewirkt werden. Der Ausgang des Anschlusses ist hierbei als Schnittstelle des Fließwegs zu einer auswechselbaren Spritzdüse zu verstehen.

Zudem fließt das Spritzmittel dann so schnell, dass gegebenenfalls dennoch vorhandene Luftblasen mitgerissen und somit entfernt werden. Folglich lassen sich kompressible Puffervolumen zwischen Ventil und Spritzdüse zumindest so weit reduzieren, dass eine ordnungsgemäße Pulsweitenmodulation des Spritzkegels gegeben ist.

Zur Ermittlung des mittleren Leitungsquerschnitts wird beispielsweise das Volumen des Spritzmittelkanals durch Integration berechnet und durch die Länge des Spritzmittelkanals dividiert. Der Düsenstock ist beispielsweise als Seitenast einer an einem Verteilergestänge verlaufenden Hauptleitung für das Spritzmittel zu verstehen. Die Ansteuerung zur Pulsweitenmodulation des Ventils erfolgt auf bekannte Weise zentral von einer Feldspritze und/oder einem zugeordneten Schlepper.

Vorzugsweise ist der Anschluss als Aufnahmestutzen für die Spritzdüse ausgebildet. Die Spritzdüse kann dann auf ergonomische Weise am Anschluss aufgeschraubt werden, beispielsweise mittels Feingewinde oder Bajonettverschluss.

Vorzugsweise beträgt der Leitungsquerschnitt des Spritzmittelkanals dann im Bereich des Anschlussstutzens 5 ― 50 mm², insbesondere 10 ― 30 mm². Dort liegt der Leitungsquerschnitt dann vorzugsweise durchgehend im vorteilhaften Bereich. Der Spritzmittelkanal ist beispielsweise als entsprechende Bohrung ausgebildet.

Vorzugsweise ist dem Ventil ein Spritzmittelfilter vorgeschaltet. Es ist dann nur ein einziger Spritzmittelfilter zum Schutz aller an der Düsenanordnung angeschlossenen Spritzdüsen nötig. Zusätzlich schützt der Spritzmittelfilter dann auch das Ventil gegenüber Verunreinigungen im Spritzmittel oder dergleichen Material. Der Spritzmittelfilter kann nach dem Abzweig von der Hauptleitung beispielsweise am Eingang zum Düsenstock angeordnet werden.

Vorzugsweise ist am/im Düsenstock ein Filtergehäuse für den Spritzmittelfilter befestigt oder ausgebildet. Das Filtergehäuse kann zum Austausch des Spritzmittelfilters eine geeignet verschließbare Öffnung aufweisen. Ebenso kann der Düsenstock zum Filtertausch vom Abzweig der Hauptleitung vorübergehend getrennt werden.

Vorzugsweise beträgt die Länge des Spritzmittelkanals höchstens 100 mm, insbesondere höchstens 60 mm. Damit lassen sich Druckverluste zwischen Ventil und Spritzdüse minimieren.

Vorzugsweise umfasst die Düsenanordnung eine am Anschluss angeschlossenen Spritzdüse. Die Spritzdüse wird beispielsweise aufgeschraubt und erzeugt dann im Arbeitsbetrieb einen gepulsten Spritzkegel mit vom Ventil 3 gesteuert modulierter Pulsweite.

Vorzugsweise umfasst der Düsenstock bezüglich eines ihn tragenden Verteilergestänges ein feststehendes Basiselement mit einem ersten Abschnitt des Spritzmittelkanals sowie ein beweglich gelagertes Umschaltelement mit wahlweise anschließenden zweiten Abschnitten des Spritzmittelkanals und jeweils zugeordneten Anschlüssen für Spritzdüsen. Folglich können Spritzdüsen mit unterschiedlicher Spritzcharakteristik ohne Montagearbeiten an das Ventil angeschlossen werden.

Zur Ermittlung des mittleren Leitungsquerschnitts des Spritzmittelkanals wird dann beispielsweise über den ersten Abschnitts und einen zugeordneten zweiten Abschnitt integriert.

Vorzugsweise beträgt der Leitungsquerschnitt der zweiten Abschnitte des Spritzmittelkanals jeweils 5 ― 50 mm², insbesondere 10 ― 30 mm². Dort liegt der Leitungsquerschnitt dann vorzugsweise durchgehend innerhalb des vorteilhaften Bereichs. Der Spritzmittelkanal ist beispielsweise als entsprechende Bohrung ausgebildet.

Vorzugsweise ist das Umschaltelement als Drehelement zur Aufnahme von wenigstens drei Spritzdüsen ausgebildet. Dies ermöglicht eine platzsparende Bauweise und einen ergonomischen Wechsel zwischen unterschiedlichen Spritzdüsen.

Das Drehelement arbeitet dann beispielsweise nach Art einer Revolvertrommel mit Rastpositionen, an denen der erste Abschnitt des Spritzmittelkanals mit jeweils einem der zweiten Abschnitte verbunden ist. Es wären prinzipiell aber auch als Schieber ausgebildete Umschaltelemente oder andere Umschaltmechanismen denkbar, sofern sich ein Spritzmittelkanal zwischen dem Ventil und dem damit verbundenen Anschluss für eine Spritzdüse in obigem Sinne definieren lässt.

Die gestellte Aufgabe wird ebenso gelöst von einer Feldspritze mit einem Verteilergestänge und mehreren daran befestigten Düsenanordnungen gemäß wenigstens einer der vorigen Ausführungsformen. Die Feldspritze kann selbstfahrend sein oder von einem Schlepper gezogen und auf bekannte Weise zentral gesteuert werden.

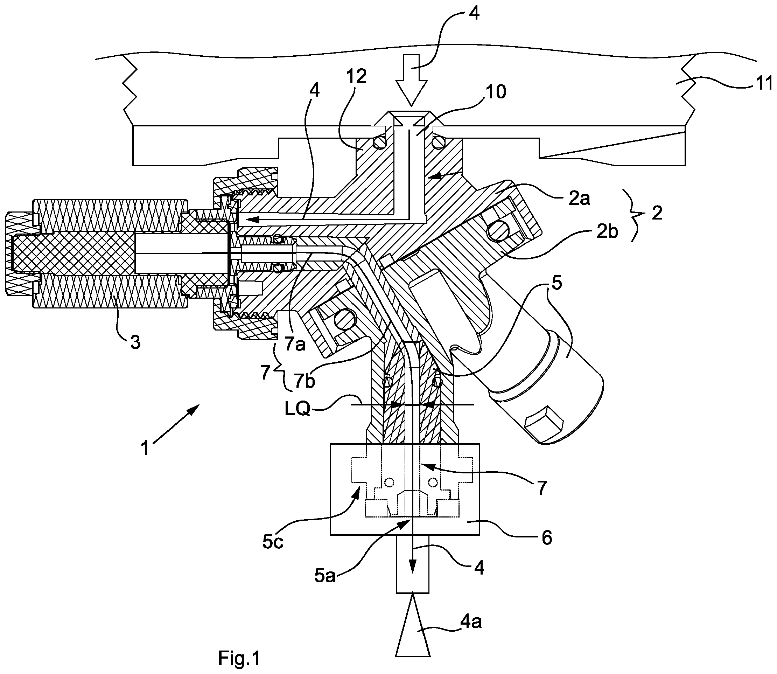

Eine bevorzugte Ausführungsform ist zeichnerisch dargestellt. Die einzige Figur zeigt eine Düsenanordnung an der Hauptleitung eines Verteilergestänges.

Wie die Figur erkennen lässt, umfasst die Düsenanordnung 1 einen Düsenstock 2 mit einem daran befestigten Ventil 3 zur pulsweitenmodulierten Freigabe eines unter geeignetem Leitungsdruck eingangsseitig am Düsenstock 2 anstehenden Spritzmittels 4. Ferner umfasst der Düsenstock 2 ausgangsseitige Anschlüsse 5 für Spritzdüsen 6 zur Abgabe des Spritzmittels 4 in Form von Spritzkegeln 4a auf eine landwirtschaftliche Anbaufläche.

Das Ventil 3 und je einer der Anschlüsse 5 sind durch einen innerhalb des Düsenstocks 2 verlaufenden Spritzmittelkanal 7 miteinander verbunden. Der Spritzmittelkanal 7 gliedert sich vorzugsweise in einen ersten Abschnitt 7a, der durch ein bezüglich eines zugeordneten Verteilergestänges (nicht dargestellt) feststehendes Basiselement 2a des Düsenstocks 2 verläuft, und in einen zweiten Abschnitt 7b, der durch ein bewegliches Umschaltelement 2b des Düsenstocks 2 zu jeweils einem der Anschlüsse 5 führt.

Das Umschaltelement 2b ist vorzugsweise als Drehelement im Sinne einer Revolvertrommel oder dergleichen drehbar in/am Basiselement 2a gelagert und weist mehrere Rastpositionen auf, an denen der erste Abschnitt 7a des Spritzmittelkanals 7 jeweils mit einem der zweiten Abschnitte 7b verbunden ist.

Der Anschluss 5 umfasst einen Ausgang 5a, der hinsichtlich des Fließwegs für das Spritzmittel 4 die Schnittstelle zu einer angeschlossenen Spritzdüse 6 bildet. Entsprechend erstreckt sich der Spritzmittelkanal 7 bis zum Ausgang 5a des Anschlusses 5.

Die Anschlüsse 5 sind vorzugsweise als Aufnahmestutzen ausgebildet, an denen sich die Spritzdüsen 6 beispielsweise mittels Bajonettverschluss 5c ergonomisch von unten her aufschrauben lassen. Die Aufnahmestutzen können in bekannter Weise integrale Bestandteile des Umschaltelements 2b sein.

Der Düsenstock 2 ist vorzugsweise über einen eingangsseitigen Spritzmittelfilter 10 an eine entlang des Verteilergestänges verlaufende Hauptleitung 11 für das Spritzmittel 4 angeschlossen. Der eingangsseitigen Spritzmittelfilter 10 sitzt in einem Filtergehäuse 12. Das Filtergehäuse 12 kann integraler Bestandteil des Düsenstocks 2 sein oder zwischen diesem und der Hauptleitung 11 eingesetzt sein.

Das Filtergehäuse 12 lässt sich von vom Düsenstock 2 oder der Hauptleitung 11 trennen, um einen Austausch des eingangsseitigen Spritzmittelfilters 10 zu ermöglichen. Alternativ könnte das Filtergehäuse 12 einen anderweitigen Zugang zum Spritzmittelfilter 10 gestatten, solange dort die geforderte Dichtigkeit unter Hauptleitungsdruck gegeben ist.

Der eingangsseitigen Spritzmittelfilter 10 schützt gemeinsam nicht nur die an den Anschlüssen 5 befestigten Spritzdüsen 6 sondern auch das Ventil 2, das für die benötigte Pulsweitenmodulation einen vergleichsweise filigranen und daher gegenüber Festkörpern im Spritzmittel 4 empfindlichen Aufbau hat. Dennoch ist der eingangsseitige Spritzmittelfilter 10 nicht zwingend notwendig, beispielsweise bei Verwendung geeignet vorgefertigter Spritzmittel 4 ohne feste Bestandteile.

Der Leitungsquerschnitt LQ des Spritzmittelkanals 7 beträgt im Mittel 5 ― 50 mm², insbesondere 10 ― 30 mm². Luftblasen können sich darin dann kaum ausbilden und werden, falls dies dennoch nicht vollständig zu vermeiden ist, zuverlässig durch das dort vergleichsweise schnell fließende Spritzmittel mitgerissen und ausgespült. Eine anderweitige Entlüftung des Spritzmittelkanals 7 ist daher entbehrlich.

Insbesondere im zweiten Abschnitt 7b des Spritzmittelkanals 7 beträgt der Leitungsquerschnitt LQ vorzugsweise durchgehend 5 ― 50 mm², insbesondere 10 ― 30 mm².

Der Leitungsquerschnitt LQ des Spritzmittelkanals 7 ist vorzugsweise rund oder elliptisch. Aber auch andere Querschnittsformen sind zumindest abschnittsweise aus Platzgründen und/oder zur Optimierung der Strömungsverhältnisse denkbar.

Der Spritzmittelkanal 7 insgesamt ist vorzugsweise höchstens 100 mm und insbesondere höchstens 60 mm lang, um Druckverluste zwischen dem Ventil 2 und der jeweils verbund e-nen Spritzdüse 6 zu minimieren.

Die beschriebene Unterteilung des Düsenstocks 2 in ein eingangsseitiges Basiselement 2a mit dem Ventil 3 und ein demgegenüber bewegliches und insbesondere drehbares Umschaltelement 2b mit mehreren und insbesondere wenigstens drei Anschlüssen 5 ist nicht zwingend notwendig. Der Düsenstock 2 könnte prinzipiell auch einen einzigen Anschluss 5 für eine Spritzdüse 6 aufweisen.

## Patentansprüche

1. Feldspritze mit einem Verteilergestänge und mehreren daran befestigten Düsenanordnungen (1), wobei die Düsenanordnungen jeweils einen Düsenstock (2) mit einem Ventil (3) zur pulsweitenmodulierten Freigabe eines Spritzmittels (4) und wenigstens einen ausgangsseitigen Anschluss (5) für eine Spritzdüse (6) umfassen, wobei das Ventil (3) mit dem Ausgang (5a) des Anschlusses (5) durch einen Spritzmittelkanal (7) verbunden ist, wobei der Leitungsquerschnitt (LQ) des Spritzmittelkanals (7) im Mittel 5 ― 50 mm² beträgt.

2. Feldspritze nach Anspruch 1, wobei bei den Düsenanordnungen jeweils der Anschluss (5) als Aufnahmestutzen für die Spritzdüse (6) ausgebildet ist.

3. Feldspritze nach Anspruch 2, wobei bei den Düsenanordnungen jeweils der Querschnitt (LQ) des Spritzmittelkanals (7) im Bereich des Anschlusses (5) 5 ― 50 mm² beträgt, insbesondere 10 ― 30 mm².

4. Feldspritze nach wenigstens einem der vorigen Ansprüche, wobei die Düsenanordnungen ferner jeweils wenigstens einen dem Ventil (3) vorgeschalteten Spritzmittelfilter (10) umfassen.

5. Feldspritze nach Anspruch 4, wobei bei den Düsenanordnungen jeweils am/im Düsenstock (2) ein Filtergehäuse (12) für den Spritzmittelfilter (10) befestigt oder ausgebildet ist.

6. Feldspritze nach wenigstens einem der vorigen Ansprüche, wobei bei den Düsenanordnungen jeweils die Länge des Spritzmittelkanals (7) höchstens 100 mm beträgt, insbesondere höchstens 60 mm.

7. Feldspritze nach wenigstens einem der vorigen Ansprüche, wobei die Düsenanordnungen ferner jeweils eine am Anschluss (5) angeschlossene Spritzdüse (6) umfassen.

8. Feldspritze nach wenigstens einem der vorigen Ansprüche, wobei bei den Düsenanordnungen jeweils der Düsenstock (2) bezüglich eines zugeordneten Verteilergestänges ein feststehendes Basiselement (2a) mit einem ersten Abschnitt (7a) des Spritzmittelkanals (7) umfasst sowie ein beweglich gelagertes Umschaltelement (7b) mit wahlweise anschließenden zweiten Abschnitten (7b) des Spritzmittelkanals (7) und jeweils zugeordneten Anschlüssen (5) für Spritzdüsen (6).

9. Feldspritze nach Anspruch 8, wobei bei den Düsenanordnungen jeweils der Leitungsquerschnitt (LQ) der zweiten Abschnitte (7b) des Spritzmittelkanals (7) jeweils 5 ― 50 mm² beträgt, insbesondere 10 ― 30 mm².

10. Feldspritze nach Anspruch 8 oder 9, wobei bei den Düsenanordnungen jeweils das Umschaltelement (7b) als Drehelement zur Aufnahme von wenigstens drei Spritzdüsen (6) ausgebildet ist.

## Claims

1. Field sprayer with a manifold assembly and a plurality of nozzle assemblies (1) attached thereto, wherein the nozzle assemblies each comprise a nozzle holder (2) with a valve (3) for pulse-width-modulated release of a spray (4) and at least one outlet-end connection (5) for a spray nozzle (6), wherein the valve (3) is connected to the outlet (5a) of the connection (5) by means of a spray duct (7), wherein the line cross-section (LQ) of the spray duct (7) on average is 5 - 50 mm².

2. Field sprayer according to claim 1, wherein, with the nozzle assemblies, the connection (5) in each case is designed as a connecting piece for the spray nozzle (6).

3. Field sprayer according to claim 2, wherein, with the nozzle assemblies, the cross-section (LQ) of the spray duct (7) in the region of the connection (5) is 5 - 50 mm², in particular 10 - 30 mm².

4. Field sprayer according to at least one of the preceding claims, wherein the nozzle assemblies in each case further comprise at least one spray filter (10) upstream of the valve (3).

5. Field sprayer according to claim 4, wherein, with the nozzle assemblies, a filter housing (12) for the spray filter (10) is attached or formed in each case to/in the nozzle holder (2).

6. Field sprayer according to at least one of the preceding claims, wherein, with the nozzle assemblies, the length of the spray duct (7) is no more than 100 mm, in particular no more than 60 mm.

7. Field sprayer according to at least one of the preceding claims, wherein the nozzle assemblies in each case further comprise a spray nozzle (6) connected to the connection (5).

8. Field sprayer according to at least one of the preceding claims, wherein, with the nozzle assemblies, the nozzle holder (2) in each case comprises, with respect to a corresponding distribution manifold, a fixed base element (2a) with a first section (7a) of the spray duct (7) and also a movably mounted switching element (7b) with optionally connecting second sections (7b) of the spray duct (7) and in each case corresponding connections (5) for spray nozzles.

9. Field sprayer according to claim 8, wherein, with the nozzle assemblies, the line cross-section (LQ) of the second sections (7b) of the spray duct (7) in each case is 5 - 50 mm², in particular 10 - 30 mm².

10. Field sprayer according to claims 8 or 9, wherein, with the nozzle assemblies the switching element (7b) is in each case designed as a rotation element for receiving at least three spray nozzles (6).

## Revendications

1. Pulvérisateur agricole comprenant une rampe distributrice et plusieurs dispositifs de buse (1) fixés sur celle-ci, dans lequel les dispositifs de buse comprennent respectivement un porte-buse (2) avec une soupape (3) pour la libération modulée en largeur d'impulsion d'un agent de pulvérisation (4) et au moins un raccord (5) côté sortie pour une buse de pulvérisation (6), dans lequel la soupape (3) est reliée à la sortie (5a) du raccord (5) par l'intermédiaire d'un canal d'agent de pulvérisation (7), dans lequel la section transversale de conduite (LQ) du canal d'agent de pulvérisation (7) est de 5-50 mm² au centre.

2. Pulvérisateur agricole selon la revendication 1, dans lequel, dans les dispositifs de buse, le raccord (5) est respectivement formé comme douilles de réception pour les buses de pulvérisation (6).

3. Pulvérisateur agricole selon la revendication 2, dans lequel, dans les dispositifs de buse, la section transversale (LQ) du canal d'agent de pulvérisation (7) dans la zone du raccord (5) est respectivement de 5-50 mm², en particulier de 10-30 mm².

4. Pulvérisateur agricole selon au moins l'une des revendications précédentes, dans lequel les dispositifs de buse comprennent en outre respectivement au moins un filtre d'agent de pulvérisation (10) raccordé en amont de la soupape (3).

5. Pulvérisateur agricole selon la revendication 4, dans lequel, dans les dispositifs de buse, un boîtier de filtre (12) pour le filtre d'agent de pulvérisation (10) est fixé ou formé respectivement sur ou dans le porte-buse (2).

6. Pulvérisateur agricole selon au moins l'une des revendications précédentes, dans lequel, dans les dispositifs de buse, la longueur du canal d'agent de pulvérisation (7) est respectivement d'au plus 100 mm, en particulier d'au plus 60 mm.

7. Pulvérisateur agricole selon au moins l'une des revendications précédentes, dans lequel les dispositifs de buse comprennent en outre respectivement une buse de pulvérisation (6) raccordée sur le raccord (5).

8. Pulvérisateur agricole selon au moins l'une des revendications précédentes, dans lequel, dans les dispositifs de buse, le porte-buse (2) comprend respectivement un élément de base (2a) fixé avec une première section (7a) du canal d'agent de pulvérisation (7) par rapport à une rampe distributrice associée, ainsi qu'un élément de commutation (7b) agencé mobile avec des secondes sections (7b) du canal d'agent de pulvérisation (7) pouvant être raccordées sélectivement et des raccords (5) respectivement associés pour les buses de pulvérisation (6).

9. Pulvérisateur agricole selon la revendication 8, dans lequel, dans les dispositifs de buse, la section transversale de conduite (LQ) des secondes sections (7b) du canal d'agent de pulvérisation (7) est respectivement de 5-50 mm², en particulier de 10 - 30 mm².

10. Pulvérisateur agricole selon la revendication 8 ou 9, dans lequel, dans les dispositifs de buse, l'élément de commutation (7b) est respectivement formé comme un élément rotatif pour la réception d'au moins trois buses de pulvérisation (6).
